# EUROPÄISCHE PATENTSCHRIFT

(11) **EP 0 805 538 B1**
(45) Veröffentlichungstag und Bekanntmachung des Hinweises auf die Patenterteilung: **30.01.2002**
(21) Anmeldenummer: 97106689.9
(22) Anmeldetag: 23.04.1997
(51) Int. Cl.: H02H 7/122

(54) **Überstrom- und Kurzschlusssicherung**
Overcurrent and short-circuit protection
Protection contre surintensité et contre les courts-circuits

(30) Priorität: 29.04.1996 DE 19617054
(43) Veröffentlichungstag der Anmeldung: 05.11.1997
(73) Patentinhaber: SEMIKRON ELEKTRONIK GMBH, 90253 Nürnberg (DE)
(72) Erfinder: Masannek, Jürgen, 90461 Nürnberg (DE); Schimanek, Ernst, 90489 Nürnberg (DE)

(56) Entgegenhaltungen:
- EP-A- 0 490 388
- WO-A-95/06972

## Beschreibung

Die Erfindung beschreibt eine Überstrom- und Kurzschlußsicherung für Leistungshalbleiter-Schaltungsanordnungen nach den Merkmalen des Oberbegriffes des Anspruches 1. Sie wird an dem Beispiel einer mit IGBT- oder MOS- Leistungshalbleiterbauelementen aufgebauten Umrichterschaltung erläutert.

In DE 42 42 560 A1 ist eine Überstromschutzeinrichtung beschrieben. Hier wird gleichzeitig eine Vorrichtung zum Erfassen eines Überstromes dargestellt. Die Überstromerfassungseinrichtung besteht aus einem Schaltelement mit einer Steuerelektrode und weiteren Bauelementen zum Erfassen eines im Schaltelement fließenden Stromes. Eine solche Vorrichtung schützt nach dortigen Angaben die Freilaufdioden gegenüber auftretenden Überströmen.

Nach dem Stand der Technik werden bei IGBT- Schaltungsaufbauten V_{CE}- Überwachungen und bei MOS- Transistoraufbauten V_{DS}- Überwachungen für den Kurzschlußschutz eingesetzt. Die Wirkungsweise beider Verfahren ist prinzipiell gleich. Beide Überwachungsmethoden stellen einen erheblichen Schaltungsaufwand dar und sind in der Regel stark temperaturabhängig. Der kostenintensive Schutz begrenzt sich auf den Kurzschlußfall, ein auftretender Überstrom muß durch eine separate Überstromüberwachung detektiert werden.

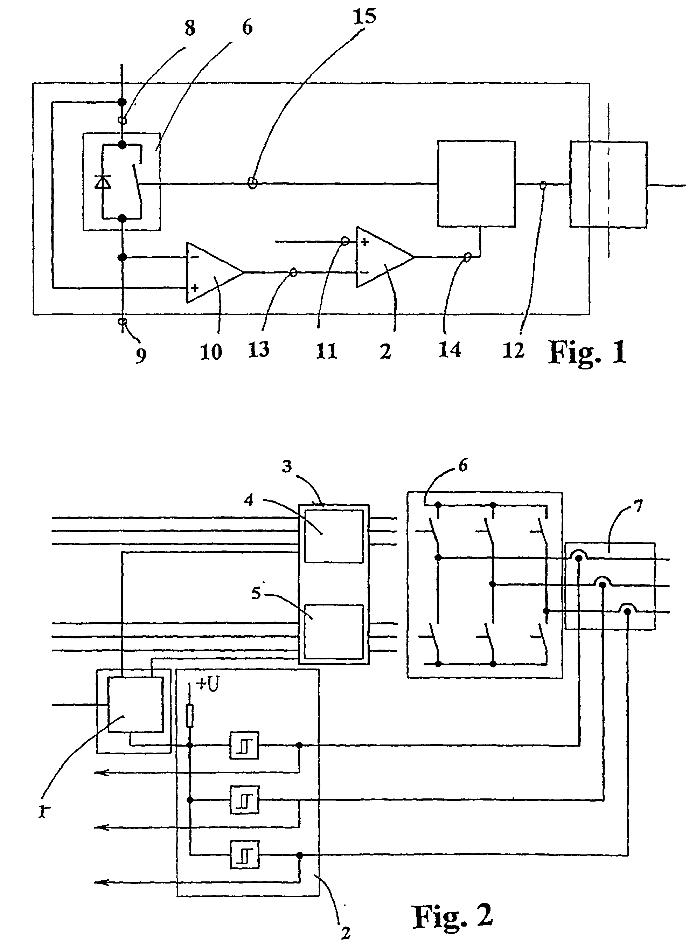

Auf der Grundlage der Fig. 1 wird der Stand der Technik näher erläutert. Wird ein Leistungsschalter (6), IGBT oder MOSFET, in einer Schaltungsanordnung eingeschaltet, dann hängt die Sättigungsspannung, d.h. der Spannungsabfall über der Kollektor-/Emitter- Strecke bei IGBT oder Drain-/Source- Strecke bei MOSFET (8, 9), einerseits vom Strom, andererseits von der Temperatur der Bauelemente ab.

Wird über die V_{CE} - bzw. V_{DS} - Erfassung (10) eine Sättigungsspannung gemessen, die den zum maximal zulässigen Strom gehörenden Spannungsabfall (11) übersteigt, dann wird der betroffene Leistungsschalter (6) auf der Sekundärseite der Ansteuerung unabhängig von dem Ansteuerbefehl des Mikroprozessors (12) gesperrt.

Die Sättigungsspannung ist stark temperaturabhängig, bei einer Temperatur ϑ₁ wird bei konstantem Strom der maximale Spannungsabfall Uₘₐₓ und bei einer Temperatur ϑ₂ der minimale Wert Uₘᵢₙ erreicht. Die Absolutwerte von ϑ₁ und ϑ₂ sind abhängig von der Technologie des Leistungsschalters (6), ϑ₁ kann sowohl größer als auch kleiner ϑ₂ sein. Die Abschaltschwelle (11), eine dem maximal zulässigen Transistorstrom proportionale Spannung, muß so dimensioniert werden, z.B. bei einem IGBT mit einer Sperrspannungsbelastbarkeit von 1200 Volt ca. 5 Volt, daß der aus dem erlaubten Strom resultierende Spannungsabfall (8, 9) Uₘₐₓ (bei ϑ₁) noch nicht, aber ein Überschreiten des Maximalstromes als Fehlersignal (14) bei der Temperatur ϑ₂ zum sicheren Abschalten der Gatespannung (15) führt.

Der größte Nachteil aus der Temperaturabhängigkeit der Sättigungsspannung besteht in dem daraus resultierenden übermäßigen, bis zu 50% überhöhten Strom, was zu höheren Überspannungen beim Abschalten führt, diese können über die maximal erlaubte Betriebsspannung gehen, was wiederum zur Zerstörung der Anordnung führen kann.

Weiterhin muß die Überwachung nach dem Einschaltsignal für eine sogenannte Ausblendzeit deaktiviert werden, da sonst während des Einschaltens ein Überstrom detektiert wird. Selbst wenn das Leistungshalbleiterbauelement durch ein Steuersignal mit unendlicher Steilheit eingeschaltet wird, sinkt die Spannung über der Kollektor/Emitter- Strecke (resp. Darin-/ Source- Strecke bei MOSFET) nur mit einer endlichen Steigung (beispielhaft mit 5KV/µs).

Die Abschaltschwelle wird folglich erst mit einer Zeitverzögerung unterschritten, so entsteht beispielhaft bei einer Spannung von 500V eine Verzögerung von 100 ns. In dieser Zeit muß die Überwachung ausgeblendet sein, da sonst fälschlicher Weise ein Überstrom detektiert würde. Der Strom durch den Leistungsschalter steigt aber ebenfalls mit endlicher Steigung, im Falle eines Kurzschlusses beispielsweise mit 1000A/µs, was hier zu einem Anstieg der Stromamplitude von 100A führen würde, was wiederum den dargestellten Effekt der durch den Stromfluß bedingten Überspannung verstärkt.

Der Kurzschlußschutz nach dem Stand der Technik ist wegen der starken Temperaturabhängigkeit der Sättigungsspannung nicht zugleich ein Überstromschutz, das muß über eine zusätzliche Istwert- Überwachung ermöglicht werden.

Die in Umrichtern zur Regelung benötigten Stromistwerte werden über Strommeßwandler, sogenannte Stromsensoren erfaßt. Der Stromistwert kann dabei beispielhaft eine zum Strom proportionale Spannung sein. Die Stromsensor- Auswertungen haben genaue Abschaltwellen, die jedoch durch ihre Verarbeitung in überlagerten Systemen einen Zeitschlupf erfahren, wodurch für das Abschalten zu große Zeiträume, beispielhaft bei IGBT von ca. 10 µs, verstreichen, um die Schaltungsanordnung wirkungsvoll vor Kurzschlüssen zu schützen.

Der nach dem Stand der Technik übliche Kurzschlußschutz in Form einer V_{CE}- bzw. V_{DS}-Überwachung (13) in der Fig. 1 ist aufwendig und muß für jedes einzelne Leistungshalbleiterbauelement (6) realisiert werden. Die Überstromüberwachung kann wegen der Totzeit nur als Überstrom-, nicht aber als Kurzschlußschutz verwendet werden. In der Praxis nach dem Stand der Technik werden beide Sicherungsmaßnahmen, die V_{CE}- und die Stromüberwachung, kombiniert angewendet, wodurch der hohe Kostenanteil resultiert.

EP-A-0.490.388 offenbart eine Erdschlußsicherung für Stromrichtes, wobei Stromistwerte an jeder der n Phasen an Wiechselstrom ausgängen erfaßt werden und alle Einztlwerte mit Schwellwerten verglichen werden, wobei die Ausgänge aller Komparatoren über ein OR-Gatter zusammengefaßt werden.

Die vorliegende Erfindung hat sich die Aufgabe gestellt, Umrichter mit einer wirtschaftlichen Überstrom- und Kurzschlußsicherung für IGBT- und MOSFET- Leistungsschaltungsanordnungen in der Form der Überstrombegrenzung für einen zuverlässigen Schutz der Anordnung vor Erdschlüssen und Überströmen mit geringem Zusatzaufwand darzustellen.

Die Aufgabe wird bei Leistungshalbleiterschaltungsanordnungen der dargestellten Art durch die Maßnahmen des kennzeichnenden Teiles des Anspruches 1 gelöst, bevorzugte Weiterbildungen werden in den Unteransprüchen beschrieben.

Die in den Schaltungsanordnungen für überlagerte Regelungen notwendigen und vorhandenen Stromsensoren am Ausgang jeder Halbbrücke detektieren ein Überschreiten des zulässigen Stromes. Sobald der Strom einer beliebigen Halbbrücke außerhalb der definierten Grenzen liegt, beispielhaft 125% des Nennstromes des Leistungshalbleiterbauelementes IGBT oder MOSFET, werden die Ansteuersignale für die Leistungsschalter auf der Primärseite gespent, wobei die Abschaltung der BOTTOM- Schalter zeitversetzt zu den TOP- Schaltern geschieht. Mit der erfinderischen Schaltung können Klemmenkurzschlüsse, Erdschlüsse und Überströme erkannt werden und folglich ist der Schutz der Schaltungsanordnung wirtschaftlich vorteilhaft möglich.

Auf der Grundlage von Schaltungsskizzen wird die Erfindung näher erläutert:
- **Fig. 1**: stellt in Skizze den relevanten Teil einer Schaltung nach dem Stand der Technik dar, wie er bereits auf vorgehenden Seiten erläutert wurde.
- **Fig. 2**: stellt die Prinzipskizze der Erfindung dar.
- **Fig. 3**: veranschaulicht einen Schaltungsast mit dem erfinderischen Schutz des Leistungsteiles einer Treiberschaltung.

**Fig. 2** stellt die Prinzipskizze der Erfindung dar. Über den Treiber (3) werden die Schaltsignale an die Leistungsschalter (6) gegeben. Die auf Lastseite in den Phasen eingebauten Stromsensoren (7) geben alle Istwerte an Fensterkomparatoren (2) weiter, die bei Maximalwertüberschreitung ein Fehlersignal ausgeben. Die Summation der Fehler findet im Fehlerspeicher (1) statt.

Bei Auftreten von Strömen außerhalb der vorgegebenen Grenzen und bei Kurzschlußzuständen erfolgt von dem Fehlerspeicher das Signal zum Öffnen der Treiberansteuerung (3) sowohl in TOP (4) als auch in BOT (5), damit erfolgt ein sicheres Ausschalten der entsprechenden Schalter (6). Durch Verkürzen dieses Befehlsweges auf diese wenigen Steuerelemente ist der sehr kurzzeitige Ablauf bis zum Öffnen der Leistungsschalter (6) möglich.

Bei angenommenen 0,5 µs für die Annahme, Verarbeitung und Weitergabe der Signale in dem Fehlerspeicher (1), den Fensterkomparatoren (2), dem Treiber (3) und in den Leistungsschaltern (6) und bei einer Bewertungszeit von 1 µs in den Stromsensoren (7) ergibt sich ein maximaler Zeitschlupf von kleiner als 3 µs für den Gesamtvorgang des Öffnens der Leistungsschalter (6) bei zu großem Überstrom oder bei einem auftretenden Kurzschluß. Dieser Zeitraum ist in jedem Falle klein genug, um die Leistungsschalter (6) vor Zerstörung durch Überforderung zu schützen. Betriebsmäßige Brückenkurzschlüsse, d.h. gleichzeitig eingeschaltete TOP- und BOTTOM- Schalter, werden von der Übergeordneten Steuerung durch Verriegelung oder ähnliche Maßnahmen ausgeschlossen.

Das hier an dem Beispiel eines n-phasigen Wechselrichters aufgezeigt Prinzip der schnellen Bewertung von Überstrom oder Kurzschluß ist in gleicher Weise analog anwendbar bei Umrichtern oder Gleichstromstellern,

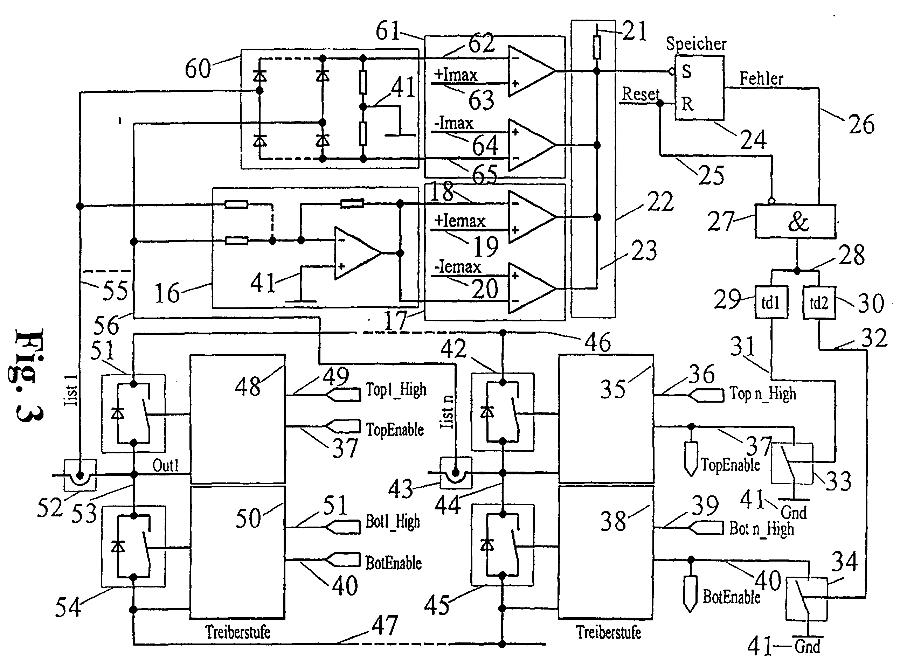

**Fig. 3** erläutert die Schaltung zum Schutz des Leistungsteiles einer Schaltungsanordnung mit mehreren Halbbrücken, bestehend aus einem unteren (45, 54) und einem oberen (42, 51) Leistungsschalter. Die Leistungsschalter können hier sowohl IGBT als auch MOSFET sein. Am Ausgang jeder Halbbrücke befindet sich eine Stromerfassung (43, 52), auch als Stromsensor bezeichnet, die bereits für die überlagerte Regelung verwendet wird und daher eine hohe Grundgenauigkeit und eine geringe Temperaturabhängigkeit aufweisen muß.

Die Ansteuerungssignale (36, 39, 49, 51) der überlagerten Regelung werden über geeignete Treiberstufen (35, 38, 48, 50) auf die Steuereingänge der Leistungshalbleiterschalter geführt. Die Treiberstufen können über die Eingänge TopEnable (37) und BotEnable (40) gesperrt werden. Falls keine derartigen Eingänge vorhanden sind, werden die einzelnen Ansteuersignale über Schalter von den Treiberstufen (35, 38, 48, 50) getrennt.

Für den Schutz werden die aus den vorhandenen Strommeßwandlern gewonnenen Istwerte (55, 56) der n Ausgänge des Leistungsteiles verwendet. Die Bezugsmasse (41) der Meßwerte ist von denen der Ausgänge (44, 53) potentialgetrennt. Weiterhin kann die Bezugsmasse (41) von der positiven (46) und der negativen (47) Zwischenkreisspannung getrennt sein, dies ist jedoch nicht zwingend notwendig.

Zum Detektieren des Überstromes werden aus den Stromistwerten (55, 56) mittels eines n-fachen Brückengleichrichters (60) die positiven (62) und negativen (65) maximalen Augenblickswerte ermittelt und durch einen Fensterkomparator (61) mit den positiven (63) und den negativen (64) Maximalamplituden verglichen.

Zur Erkennung eines Erdschlusses werden die Stromistwerte (55, 56) auf einen Summationsverstärker (16) geführt. Die Summe aller Ausgangsströme (18) wird mittels eines weiteren Fensterkomparators (17) auf Über- oder Unterschreiten der maximalen (19) oder minimalen (20) Schwelle kontrolliert.

Die Ausgänge (23) aller Fensterkomparatoren (61, 17) werden über eine Wired-Or (22) bzw. einer anderen ODER- Verknüpfung auf den Setzeingang eines Fehlerspeichers (24) geführt. Das Ausgangssignal "Fehler" (26) kann über das Signal "Reset" (25) zurückgesetzt werden. Alternativ kann der Fehlerspeicher auch mit einer monostabilen Zeitstufe realisiert werden, die kein Reset- Signal benötigt.

Der Ausgang (28) der UND- Verknüpfung (27) wird über die Verzögerungsglieder td1 (29) bzw. td2 (30) auf die Steuereingänge der Schalter (33) und (34) geführt. Die Zeitverzögerung td1 (29) ist in jedem Falle ungleich der Zeitverzögerung td2 (39). In der Zeit, in der kein Fehlersignal (26) und kein Reset- Signal (25) gesetzt ist, sind die Schalter (33 und 34) geschlossen, die Kontrolle der Leistungshalbleiterschalter liegt dann beim Regler.

Sobald die Überwachungsschaltung einen Strom außerhalb des erlaubten Bereiches erkennt, werden die Schalter (33 und 34) zeitversetzt geöffnet und damit die Leistungsschalter (42, 45, 51, 54) durch die Treiberstufen (35, 38, 48, 50) gesperrt. Der Zustand der Ansteuersignale vom Regler hat keinen Einfluß mehr. Die Zeitverzögrung aller Komponenten der Schutzschaltung (Stromerfassung, Überstromerkennung bis zum Abschalten der Leistungsschalter) erfolgt in jedem Falle innerhalb der Zeit, die jeder Leistungshalbleiterschalter zerstörungsfrei übersteht.

## Patentansprüche

1. Steuereinrichtung zur Überstrom- und Kurzschlußsicherung für Leistungshalbleiter-Schaltungsanordnungen mit Stromdetektoreinrichtungen, Vergleichseinrichtungen, Signalgeneratoreinrichtungen und einer Einrichtung zum Unterbrechen des Betriebes der Halbleiterbauelemente
**dadurch gekennzeichnet, daß**
Stromistwerte an jeder der n Phasen eines Umrichterleistungsteiles an Wechselstromausgängen erfaßt und in zwei parallelen Einrichtungen verarbeitet werden, wobei in der ersten Einrichtung (16, 17) ein Summenstrom gebildet und mit einem Schwellwert verglichen wird und in der zweiten Einrichtung (60, 61) der maximale positive und negative Augenblickswert aller Einzelwerte mit Schwellwerten verglichen wird, um die so erzielten Ausgangssignale der Einrichtungen über ein OR- Gatter (22) zusammenzuführen, zu speichern (24) und über Verzögerungsglieder mit unterschiedlichen Zeitverdögerungen (29, 30) zur Beeinflussung der Ansteuerung der Leistungsschalter in den positiven und negativen Brückenzweigen des Umrichterleistungsteiles zu verwerten.

2. Einrichtung nach Anspruch 1, **dadurch gekennzeichnet, daß**
die Stromsensoren (7) 1µs, und die Istwertaufbereitungen (16, 60), Fensterkomparatoren (2), Fehlerspeicher (1), Einschaltsperren (33, 34) und Treiber (35, 38) einzeln jeweils für die Annahme, Verarbeitung und Weitergabe der Signale weniger als 0,5 µs Zeit benötigen.

3. Einrichtung nach Anspruch 1, **dadurch gekennzeichnet, daß**
ausschließlich die Stromwandlersignale zur Erkennung von Überströmen sowie Kurz- und Erdschlüssen benutzt werden.

4. Einrichtung nach Anspruch 3, **dadurch gekennzeichnet, daß**
bei Auftreten von Strömen außerhalb der vorgegebenen Grenzen und/oder bei Kurzschlußzuständen vom Fehlerspeicher (1) ein Signal zum Öffnen der Treibersteuerung (3) sowohl in TOP (4) als auch in BOTTOM (5) erfolgt, wodurch alle Leistungsschalter (6) sicher ausschalten.

5. Einrichtung nach Anspruch 4, **dadurch gekennzeichnet, daß**
die TOP- und BOTTOM- Schalter zeitversetzt ausgeschaltet werden.

6. Einrichtung nach Anspruch 1, **dadurch gekennzeichnet, daß**
die Fehlermeldung bis zum Reset- Signal oder für eine definierte Zeit gespeichert wird.

## Claims

1. A control device for the overcurrent and short-circuit protection for power semiconductor circuit layouts comprising current detectors, comparators, signal generators and a means for interrupting the operation of the semiconductor components
**characterized in that**
actual current values at each of the n phases of a converter power component are detected at a.c. outputs and processed in two parallel means, a sum current being formed in the first means (16, 17) and compared with a threshold value and the maximum positive and negative instant values of all individual values being compared with threshold values in the second means (60, 61) to combine the thus obtained output signals of said means via an OR gate (22), store (24) them and utilize them via delay elements (29, 30) having differing delays to influence the actuation of the power switches in the positive and negative bridge arms of the converter power component.

2. The device according to claim 1, **characterized in that**
the current sensors (7) require 1 µs, and the actual-value preparations (16, 60), window comparators (2), fault storages (1), lock-out devices (33, 34) and drivers (35, 38) separately need in each case less than 0.5 µs for accepting, processing and transmitting the signals.

3. The device according to claim 1, **characterized in that**
exclusively the current transformer signals are used to; detect overcurrents as well as short circuits and line-to-earth faults.

4. The device according to claim 3, **characterized in that**
in the case of currents beyond the given limits and/or of short-circuit states from the fault storage (1) a signal is applied for opening the driver control (3) in both TOP (4) and BOTTOM (5), so that all power switches (6) switch off reliably.

5. The device according to claim 4, **characterized in that**
the TOP and BOTTOM switches are switched off in time-shifted manner.

6. The device according to claim 1, **characterized in that**
the fault signal is stored up to the reset signal or for a defined period of time.

## Revendications

1. Dispositif de commande pour la protection contre des surintensités de courant et contre des courts-circuits pour des montages à semi-conducteurs de puissance avec des dispositifs détecteurs de courant, des dispositifs comparateurs, des dispositifs générateurs de signaux et un dispositif pour l'interruption du fonctionnement des composants semi-conducteurs,
**caractérisé en ce que**
des valeurs réelles de courants sont acquises sur les sorties de courants alternatifs de chacune des n phases d'une partie de puissance de convertisseur et sont traitées dans deux dispositifs parallèles, un courant de somme étant formé et comparé à une valeur de seuil dans le premier dispositif (16, 17) et la valeur momentanée maximale positive et négative de toutes les valeurs individuelles étant comparée à des valeurs de seuil dans le deuxième dispositif (60, 61) pour envoyer les signaux de sortie ainsi obtenus des dispositifs par l'intermédiaire d'une porte OU (22), pour les mémoriser (24) et pour les exploiter par l'intermédiaire d'éléments de retardement (29, 30) ayant différents retards afin d'influencer la commande des interrupteurs de puissance dans les branches à pont positives et négatives de la partie de puissance de convertisseur.

2. Dispositif selon la revendication 1, **caractérisé en ce que**
les capteurs de courants (7) ont besoin de 1 µs et **en ce que** les préparations de valeurs réelles (16, 60), les comparateurs à fenêtres (2), la mémoire d'erreurs (1), les blocages de branchement (33, 34) et les circuits d'attaque (35, 38) ont besoin individuellement à chaque fois de moins de 0,5 µs pour la réception, le traitement et la retransmission des signaux.

3. Dispositif selon la revendication 1, **caractérisé en ce que**
seuls les signaux de convertisseur de courant sont utilisés pour la détection de surintensités de courant ainsi que de courts-circuits et de fuites à la terre.

4. Dispositif selon la revendication 3, **caractérisé en ce que**,
en présence de courants en dehors des limites prédéterminées et/ou en présence d'états de courts-circuits, la mémoire d'erreurs (1) donne un signal pour l'ouverture de la commande d'attaque (3) aussi bien dans TOP (4) que dans BOTTOM (5), ce qui fait que tous les interrupteurs de puissance (6) sont coupés de manière sûre.

5. Dispositif selon la revendication 4, **caractérisé en ce que**
les interrupteurs TOP et BOTTOM sont coupés avec un certain décalage dans le temps.

6. Dispositif selon la revendication 1, **caractérisé en ce que**
le message d'erreur est mémorisé jusqu'au signal de remise à l'état initial ou pendant un temps défini.
